# EUROPEAN PATENT APPLICATION

(11) **EP 4 530 304 A1**
(43) Date of publication of application: **02.04.2025**
(21) Application number: 24152444.6
(22) Date of filing: 17.01.2024
(51) Int. Cl.: C08G 18/10, C08G 18/44, C08G 18/75

(54) **FATIGUE-RESISTANT SUPRAMOLECULAR POLYURETHANE (PU), AND PREPARATION METHOD AND USE THEREOF**

(30) Priority: 26.09.2023 CN 202311252909
(71) Applicant: Lanzhou Institute of Chemical Physics, CAS, Lanzhou City Gansu 730000 (CN)
(72) Inventor: ZHANG, Xinrui, Lanzhou City, 730000 (CN); XU, Jing, Lanzhou City, 730000 (CN); SHAO, Mingchao, Lanzhou City, 730000 (CN); CHEN, Tianze, Lanzhou City, 730000 (CN); WANG, Xiaoyue, Lanzhou City, 730000 (CN); ZHANG, Yaoming, Lanzhou City, 730000 (CN); WANG, Qihua, Lanzhou City, 730000 (CN); WANG, Tingmei, Lanzhou City, 730000 (CN); YANG, Zenghui, Lanzhou City, 730000 (CN)
(74) Representative: MERH-IP Matias Erny Reichl Hoffmann Patentanwälte PartG mbB

(57) **Abstract**

Provided are a fatigue-resistant supramolecular polyurethane (PU), and a preparation method and use thereof, belonging to the technical field of PU materials. The preparation method includes: mixing a diol, a diisocyanate, a catalyst, and a first organic solvent to obtain a mixture, and subjecting the mixture to prepolymerization to obtain a PU prepolymer, the diol being selected from the group consisting of a polyester diol and a polyether diol; mixing the PU prepolymer, 4,4'-diaminodicyclohexylmethane, and a second organic solvent to obtain a mixed mixture, and subjecting the mixed mixture to chain extension to obtain a chain extension product; and mixing the chain extension product, reinforcing phase total organic carbon (TOC), and a third organic solvent to obtain a mixed system, and subjecting the mixed system to first addition reaction to obtain the fatigue-resistant supramolecular PU, the reinforcing phase TOC having a structure shown in formula I.

## Description

### TECHNICAL FIELD

The present disclosure relates to the technical field of polyurethane (PU) materials, and in particular to a fatigue-resistant supramolecular PU, and a preparation method and use thereof.

### BACKGROUND

With the rapid development of modern technology, there is an increasing global demand for high-performance polymer materials. Polyurethane (PU), as an emerging polymer material, has advantages such as excellent mechanical strength, high wear resistance, and wide environmental applicability, and shows broad application prospects in the fields of aerospace, intelligent manufacturing, automobiles, military equipment, body armor, and large bridges.

During the practical application of large mechanical equipment (such as shield tunneling machines and cranes), materials used for the large mechanical equipment undergo long-term cyclic loading, and fatigue cracks are prone to occur and induce crack propagation under the action of such long-term uninterrupted loading, leading to the risk of catastrophic damage and fatigue failure of the materials. These catastrophic damage and fatigue failure mainly result from the slow accumulation of fatigue damage caused by repeated stress. In recent years, PU materials used in the sealing field are known as an "immune system" of large mechanical equipment and play an important role in various projects such as tunnel excavation, subway construction, sewage pipelines, and undersea tunnels. However, the existing PU materials may have a significant attenuation of mechanical properties under high linear speed and high pressure conditions, making it difficult to achieve long-term service in large equipment, thereby seriously affecting the engineering cycle and equipment life.

Considering the complexity of material service environments and harsh working conditions, people's demand for engineering materials with high strength, toughness, and fatigue resistance has become increasingly prominent. However, traditional PU materials have seriously restricted the development and application of PU-based sealing materials due to factors including weak mechanical strength, poor toughness, and fatigue failure. It is well-known that strength, toughness, and fatigue resistance are the most critical performance of structural engineering materials, and directly affect the reliability of materials in practical application. Accordingly, it is still an urgent problem to be solved in the field of PU materials to simultaneously achieve ultra-high strength, toughness, and fatigue resistance by means of reasonable molecular design.

### SUMMARY

In view of this, an object of the present disclosure is to provide a fatigue-resistant supramolecular PU, and a preparation method and use thereof. The supramolecular PU according to the present disclosure exhibits excellent fatigue resistance.

To achieve the above object, the present disclosure provides the following technical solutions.

The present disclosure provides a method for preparing a fatigue-resistant supramolecular polyurethane (PU), including:
mixing a diol, a diisocyanate, a catalyst, and a first organic solvent to obtain a mixture, and subjecting the mixture to prepolymerization to obtain a PU prepolymer, the diol being selected from the group consisting of a polyester diol and a polyether diol;
mixing the PU prepolymer, 4,4'-diaminodicyclohexylmethane, and a second organic solvent to obtain a mixed mixture, and subjecting the mixed mixture to chain extension to obtain a chain extension product; and
mixing the chain extension product, reinforcing phase total organic carbon (TOC), and a third organic solvent to obtain a mixed system, and subjecting the mixed system to first addition reaction to obtain the fatigue-resistant supramolecular PU, the reinforcing phase TOC having a structure shown in formula I:

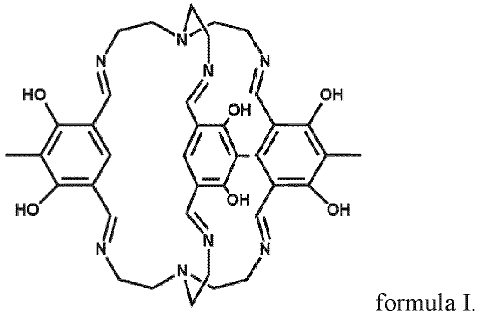

In some embodiments, a molar ratio of the diol, the diisocyanate, the catalyst, the 4,4'-diaminodicyclohexylmethane, and the reinforcing phase TOC is in a range of (3-60):(6-120):(0.1-1):(1-60):(0.01-10).

In some embodiments, the reinforcing phase TOC is prepared by a process including:
mixing 4,6-dihydroxy-5-methylisophthalaldehyde, tris(2-aminoethyl)amine, and a fourth organic solvent to obtain a mixed solution; and
subjecting the mixed solution to second addition reaction to obtain the reinforcing phase TOC.

In some embodiments, a molar ratio of the 4,6-dihydroxy-5-methylisophthalaldehyde and the tris(2-aminoethyl)amine is in a range of (0.02-20):(0.03-30).

In some embodiments, the diol has a molecular weight of 1,000 g/mol to 3,000 g/mol.

In some embodiments, the diisocyanate is selected from the group consisting of hexamethylene diisocyanate, isophorone diisocyanate, and diphenylmethane diisocyanate.

In some embodiments, the prepolymerization is conducted at a temperature of 60°C to 80°C for 3 h to 5 h.

In some embodiments, the first addition reaction is conducted at a temperature of 60°C to 80°C for 1 h to 4 h.

The present disclosure further provides a fatigue-resistant supramolecular PU prepared by the method as described in the above solutions.

The present disclosure also provides use of the fatigue-resistant supramolecular PU as described in the above solutions in the fields of national defense, aerospace, automobile industry, and soft robotics.

The present disclosure provides a method for preparing a fatigue-resistant supramolecular polyurethane (PU), including: mixing a diol, a diisocyanate, a catalyst, and a first organic solvent to obtain a mixture, and subjecting the mixture to prepolymerization to obtain a PU prepolymer, the diol being selected from the group consisting of a polyester diol and a polyether diol; mixing the PU prepolymer, 4,4'-diaminodicyclohexylmethane, and a second organic solvent to obtain a mixed mixture, and subjecting the mixed mixture to chain extension to obtain a chain extension product; and mixing the chain extension product, reinforcing phase total organic carbon (TOC), and a third organic solvent to obtain a mixed system, and subjecting the mixed system to first addition reaction to obtain the fatigue-resistant supramolecular PU, the reinforcing phase TOC having a structure shown in formula I.

Compared with the prior art, some embodiments of the present disclosure have the following beneficial effects.

According to the present disclosure, the proposed design concept that combines the reinforcing phase TOC, a supramolecular interaction, and a PU network could achieve significant optimization of an overall performance of the material, thus filling the blank in the design of PU materials with ultra-high strength, ultra-high toughness, and fatigue resistance. The design concept is expected to provide a new path for the future development of structural engineering materials with high strength, toughness, and fatigue resistance, and shows broad application prospects in the fields of national defense, aerospace, automotive industry, and soft robotics.

Experimental data shows that the PU network could be significantly strengthen by an extremely small amount of three-dimensional cage-like reinforcing phase TOC, thus giving the supramolecular PU a tensile strength of 85.0 MPa and a toughness of 418.4 MJ/m³. Since supramolecular interactions endow the polymer network with sufficient energy dissipation, the supramolecular PU also exhibits an excellent fatigue resistance and could still achieve stable recovery after 1,000 cycles of stretching at 200% strain.

### BRIEF DESCRIPTION OF THE DRAWINGS

FIG. 1 shows a hydrogen nuclear magnetic resonance (H-NMR) spectrum of the reinforcing phase TOC.
FIG. 2 shows an X-ray diffraction (XRD) curve of the reinforcing phase TOC.
FIG. 3 shows a schematic diagram of the principle for preparing the fatigue-resistant supramolecular PU in Example 1 of the present disclosure.
FIG. 4 shows XRD curves of the fatigue-resistant supramolecular PUs prepared in Examples 1 to 3.
FIG. 5 shows a summary bar graph of stress and toughness of the films in Examples 1 to 3 and Comparative Example 1.
FIG. 6 shows a stress-strain curve of the fatigue-resistant supramolecular PU prepared in Example 2 in the first 500 cycles.
FIG. 7 shows a stress-strain curve of the fatigue-resistant supramolecular PU prepared in Example 2 in the second 500 cycles.
FIG. 8 shows a summary of stress values of the fatigue-resistant supramolecular PU prepared in Example 2 corresponding to the first 500 cycles at 200% strain.
FIG. 9 shows a summary of stress values of the fatigue-resistant supramolecular PU prepared in Example 2 corresponding to the second 500 cycles at 200% strain.
FIG. 10 shows a stress value comparison of the fatigue-resistant supramolecular PU prepared in Example 2 at 200% strain corresponding to the first and second 500 cycles, respectively.
FIG. 11 shows a schematic diagram of a synthesis process in Comparative Example 1 of the present disclosure.

### DETAILED DESCRIPTION OF THE EMBODIMENTS

The present disclosure provides a method for preparing a fatigue-resistant supramolecular PU, including (or consisting of) the following steps:
mixing a diol, a diisocyanate, a catalyst, and a first organic solvent to obtain a mixture, and subjecting the mixture to prepolymerization to obtain a PU prepolymer, the diol being selected from the group consisting of a polyester diol and a polyether diol;
mixing the PU prepolymer, 4,4'-diaminodicyclohexylmethane, and a second organic solvent to obtain a mixed mixture, and subjecting the mixed mixture to chain extension to obtain a chain extension product; and
mixing the chain extension product, reinforcing phase total organic carbon (TOC), and a third organic solvent to obtain a mixed system, and subjecting the mixed system to first addition reaction to obtain the fatigue-resistant supramolecular PU, the reinforcing phase TOC having a structure shown in formula I:

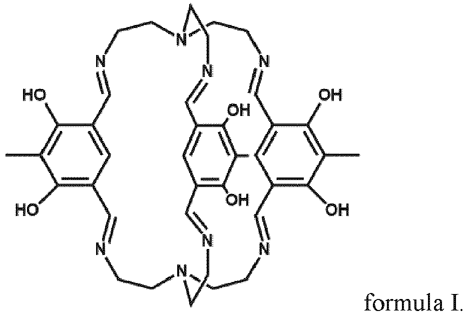

In the present disclosure, unless otherwise specified, all raw materials used herein are commercially available products in the art.

In some embodiments, a diol, a diisocyanate, a catalyst, and an organic solvent are mixed and then subjected to prepolymerization to obtain a PU prepolymer, where the diol is selected from the group consisting of a polyester diol and a polyether diol.

In some embodiments, the polyester diol is polycarbonate diol (PCDL).

In some embodiments, the diol has a molecular weight of 1,000 g/mol to 3,000 g/mol.

In some embodiments, the diisocyanate is selected from the group consisting of hexamethylene diisocyanate, isophorone diisocyanate, and diphenylmethane diisocyanate.

In some embodiments, the catalyst is dibutyltin dilaurate.

In some embodiments, the prepolymerization is conducted at a temperature of 60°C to 80°C; and the prepolymerization is conducted for 3 h to 5 h.

In some embodiments, the diol is mixed with the first organic solvent, stirred for 1 h to 3 h under oil bath at a heating temperature of 100°C to 120°C in a N₂ atmosphere, and then subjected to water removal and drying to obtain a mixed solution; and when the mixed solution is cooled to 60°C to 80°C, the diisocyanate and the catalyst are added thereto and subjected to the prepolymerization while stirring for 3 h to 5 h to obtain the PU prepolymer.

In the present disclosure, there are no special limitations on stirring parameters, and stirring manners well-known to those skilled in the art may be used.

In some embodiments, the first organic solvent is *N*,*N-*dimethylformamide (DMF), N,N-dimethylacetamide (DMA), or anhydrous chloroform. There is no special limitation on an amount of the first organic solvent, as long as the raw materials are completely dissolved.

After the PU prepolymer is obtained, the PU prepolymer, 4,4'-diaminodicyclohexylmethane, and the second organic solvent are mixed and then subjected to chain extension to obtain a chain extension product.

In some embodiments, the 4,4'-diaminodicyclohexylmethane and the second organic solvent are mixed and then added dropwise into the PU prepolymer.

In some embodiments, the types of the second organic solvent is the same as that of the first organic solvent as described in the above solutions, and will not be described herein.

In the present disclosure, there is no special limitation on the rate of the addition dropwise.

In some embodiments, the prepolymerization is conducted at room temperature for 0.5 h to 5 h, and the time of conducting the prepolymerization is calculated from the time when the dropwise addition is completed.

After the chain extension product is obtained, the chain extension product, reinforcing phase TOC, and the third organic solvent are mixed and then subj ected to first addition reaction to obtain the fatigue-resistant supramolecular PU; where the reinforcing phase TOC has a structure shown in formula I.

In the present disclosure, the types of the third organic solvent is the same as that of the first organic solvents as described in the above solutions, and will not be described herein.

In some embodiments, the first addition reaction is conducted at a temperature of 60°C to 80°C for 1 h to 4 h.

In some embodiments, a molar ratio of the diol, the diisocyanate, the catalyst, the 4,4'-diaminodicyclohexylmethane, and the reinforcing phase TOC is in a range of (3-60):(6-120):(0.1-1):(1-60):(0.01-10), preferably 3:6:0.1:(2.7-2.9):(0.01-0.1), and more preferably 3:6:0.1:2.9:0.01, 3:6:0.1:2.8:0.05, or 3:6:0.1: 2.7:0.1.

In some embodiments, the reinforcing phase TOC is prepared by a process including (or consisting of) the following steps:
mixing 4,6-dihydroxy-5-methylisophthalaldehyde, tris(2-aminoethyl)amine, and a fourth organic solvent to obtain a mixed solution; and
subjecting the mixed solution to second addition reaction to obtain the reinforcing phase TOC.

In some embodiments, a reaction principle of the second addition reaction is as follows:

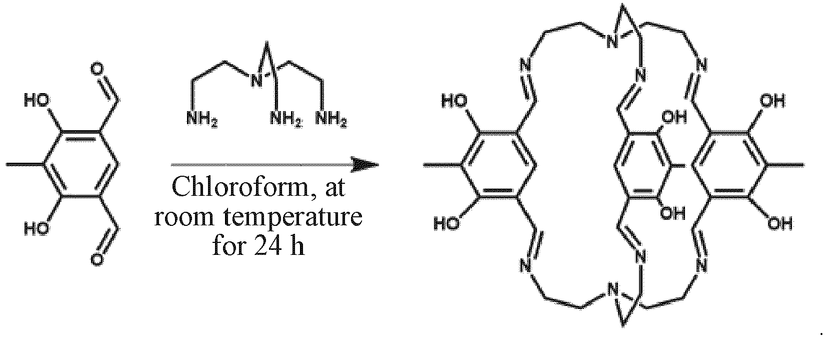

In some embodiments, a molar ratio of the 4,6-dihydroxy-5-methylisophthalaldehyde and the tris(2-aminoethyl)amine is in a range of (0.02-20):(0.03-30).

In some embodiments, the tris(2-aminoethyl)amine and the 4,6-dihydroxy-5-methylisophthalaldehyde are dissolved in the fourth organic solvent, separately, to obtain a tris(2-aminoethyl)amine solution and a 4,6-dihydroxy-5-methylisophthalaldehyde solution; the tris(2-aminoethyl)amine solution is added into a three-necked round-bottomed flask, and introduced with nitrogen; after that, the 4,6-dihydroxy-5-methylisophthalaldehyde solution is slowly added dropwise thereto, so as to obtain the mixed solution.

In some embodiments, the fourth organic solvent is anhydrous chloroform.

In some embodiments, the second addition reaction is conducted at room temperature, and the second addition reaction is conducted for 12 h to 36 h, preferably 24 h.

In some embodiments, after the second addition reaction is completed, the fourth organic solvent is removed, and a resulting yellow solid is washed with ethanol, and then subjected to vacuum-drying to obtain the reinforcing phase TOC (in a form of a light yellow powder).

In some embodiments, the washing is to remove unreacted raw materials.

In some embodiments, the vacuum-drying is conducted at a temperature of 40°C to 60°C for 12 h to 24 h in a vacuum drying oven.

In some embodiments, after the first addition reaction is completed, a resulting product is poured into a PTFE (polytetrafluoroethylene) mold and then vacuum-dried at a temperature of 60°C to 80°C for 24 h to 48 h to obtain the fatigue-resistant supramolecular PU.

The present disclosure further provides a fatigue-resistant supramolecular PU prepared by the method as described in the above solutions.

The present disclosure further provides use of the fatigue-resistant supramolecular PU in the fields of national defense, aerospace, automobile industry, and soft robotics.

In the present disclosure, there is no special limitation on a specific way of the use, and ways well-known to those skilled in the art may be used.

The technical solutions of the present disclosure will be clearly and completely described below with reference to the examples of the present disclosure. Apparently, the examples are merely a part rather than all of the examples of the present disclosure. All other embodiments obtained by those skilled in the art based on the embodiments of the present disclosure without creative efforts shall fall within the scope of the present disclosure.

In the examples of the present disclosure, the reinforcing phase TOC used was prepared as follows:

A first mixed solution of 0.03 mol of tris(2-aminoethyl)amine and 100 mL of anhydrous chloroform were added into a three-necked round-bottom flask, nitrogen was then introduced thereto; after that, a second mixed solution consisting of 0.02 mol of 4,6-dihydroxy-5-methylisophthalaldehyde and 100 mL of anhydrous chloroform were slowly added dropwise thereto to obtain a third mixed solution.

The third mixed solution was stirred at room temperature for 12 h. After that, the chloroform solvent was removed, and a resulting yellow solid was then washed with 500 mL of ethanol to remove unreacted raw materials.

A resulting system was subjected to vacuum-drying in a vacuum-drying oven at 40°C for 12 h to obtain the reinforcing phase TOC in a form of a light yellow powder.

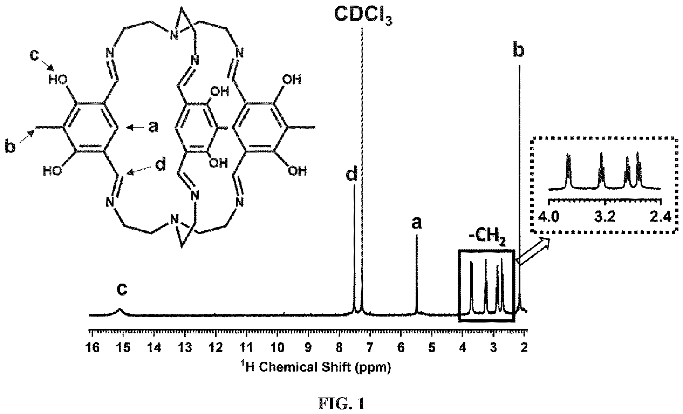

A structure of the reinforcing phase TOC was characterized. FIG. 1 shows an H-NMR spectrum of the reinforcing phase TOC. The corresponding H-NMR results are as follows: ¹H NMR (CDCl₃, 400 MHz): δ= 2.15 (s, 9 H), 2.71 (d, 6 H), 2.88 (t, 6 H), 3.25 (t, 6 H), 3.73 (d, 6 H), 5.48 (s, 3 H), 7.50 (s, 6 H), 15.09 ppm (s, 6 H).

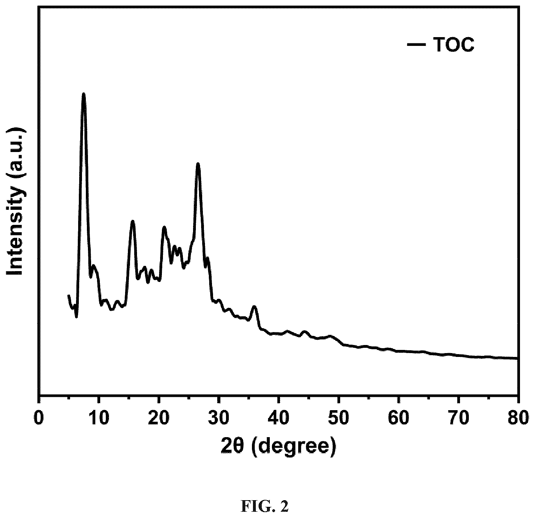

FIG. 2 shows an XRD curve of the reinforcing phase TOC.

### Example 1

(1) PCDL (6.00 g, 3.00 mmol) with a molecular weight of 2,000 g/mol and 10 mL of DMF as a reaction solvent were mixed, then stirred in an oil bath at 110°C under N₂ atmosphere for 2 h, and then subjected to water removal and drying.
(2) A resulting mixed solution was cooled to 80°C, and isophorone diisocyanate (1.33 g, 6.00 mmol) and a catalyst dibutyltin dilaurate (0.10 g, 0.1 mmol) were added thereto under a nitrogen atmosphere, and then stirred while heating for 3 h to obtain a PU prepolymer.
(3) After the prepolymer was prepared, 4,4'-diaminodicyclohexylmethane (0.61 g, 2.9 mmol) and 10 mL of DMF as a reaction solvent were mixed to be uniform, and then slowly added dropwise into a reaction device and stirred for about 1 h.
(4) The TOC (0.07 g, 0.01 mmol) was then added and subjected to reaction for 1 h.
(5) After the reaction was completed, a resulting product was poured into a PTFE mold, dried to evaporate the solvent at 80°C for 48 h, obtaining a dry fatigue-resistant supramolecular PU.

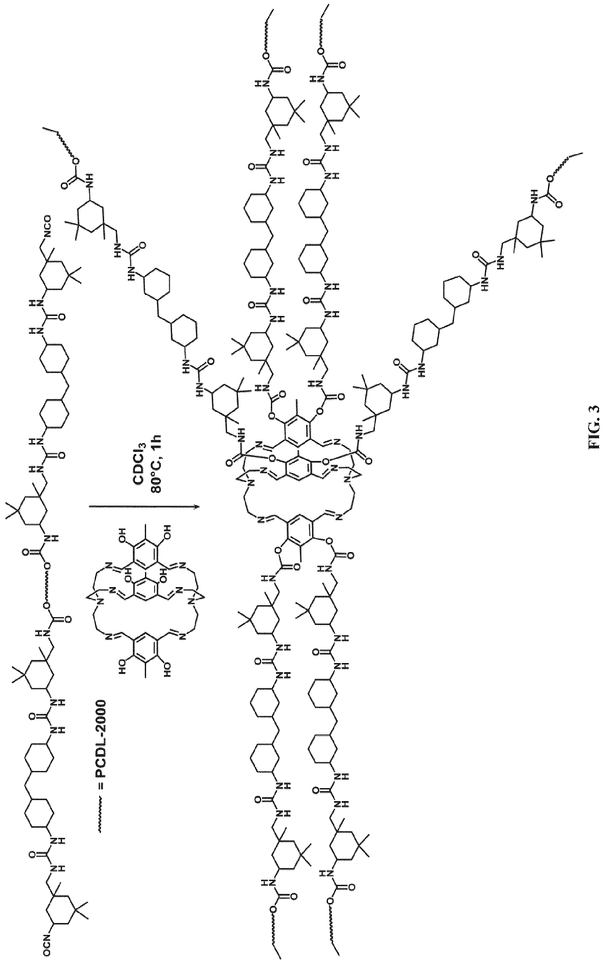

FIG. 3 shows a schematic diagram of the principle for preparing the fatigue-resistant supramolecular PU in Example 1.

### Example 2

(1) PCDL (6.00 g, 3.00 mmol) with a molecular weight of 2,000 g/mol and 10 mL of DMF as a reaction solvent were mixed, then stirred in an oil bath at 110°C under N₂ atmosphere for 2 h, and then subjected to water removal and drying.
(2) A resulting mixed solution was cooled to 80°C, and isophorone diisocyanate (1.33 g, 6.00 mmol) and a catalyst dibutyltin dilaurate (0.10 g, 0.1 mmol) were added thereto under a nitrogen atmosphere, and then stirred while heating for 3 h to obtain a PU prepolymer.
(3) After the prepolymer was prepared, 4,4'-diaminodicyclohexylmethane (0.59g, 2.8mmol) and 10 mL of DMF as a reaction solvent were mixed to be uniform, and then slowly added dropwise into a reaction device and stirred for about 1 h.
(4) The TOC (0.35g, 0.05mmol) was then added and subjected to reaction for 1 h.
(5) After the reaction was completed, a resulting product was poured into a PTFE mold, dried to evaporate the solvent at 80°C for 48 h, obtaining a dry fatigue-resistant supramolecular PU.

### Example 3

(1) PCDL (6.00 g, 3.00 mmol) with a molecular weight of 2,000 g/mol and 10 mL of DMF as a reaction solvent were mixed, then stirred in an oil bath at 110°C under N₂ atmosphere for 2 h, and then subjected to water removal and drying.
(2) A resulting mixed solution was cooled to 80°C, and isophorone diisocyanate (1.33 g, 6.00 mmol) and a catalyst dibutyltin dilaurate (0.10 g, 0.1 mmol) were added thereto under a nitrogen atmosphere, and then stirred while heating for 3 h to obtain a PU prepolymer.
(3) After the prepolymer was prepared, 4,4'-diaminodicyclohexylmethane (0.57g, 2.7mmol) and 10 mL of DMF as a reaction solvent were mixed to be uniform, and then slowly added dropwise into a reaction device and stirred for 1 h.
(4) The TOC (0.7g, 0.1mmol) was then added and subjected to reaction for 1 h.
(5) After the reaction was completed, a resulting product was poured into a PTFE mold, dried to evaporate the solvent at 80°C for 48 h, obtaining a dry fatigue-resistant supramolecular PU.

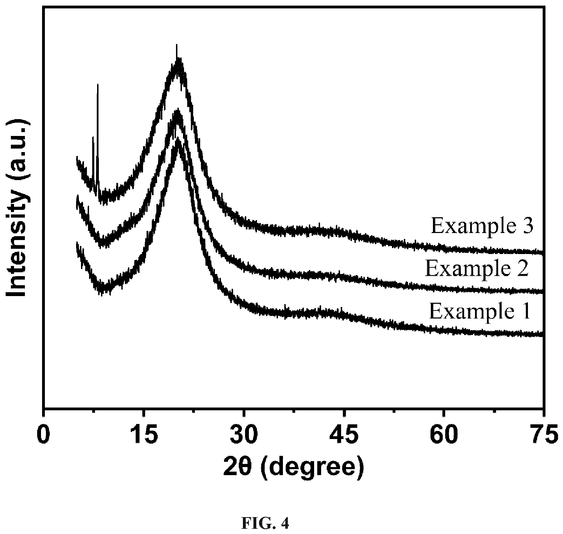

FIG. 4 shows XRD curves of the fatigue-resistant supramolecular PUs prepared in Examples 1 to 3.

**Comparative Example 1** (a comparative experiment without the reinforcing phase (TOC), which was to prove that the TOC-containing structure could enable PU materials to have excellent mechanical strength, toughness, and fatigue resistance)
(1) PCDL (6.00 g, 3.00 mmol) with a molecular weight of 2,000 g/mol and 10 mL of DMF as a reaction solvent were mixed, then stirred in an oil bath at 110°C under N₂ atmosphere for 2 h, and then subjected to water removal and drying.
(2) A resulting mixed solution was cooled to 80°C, and isophorone diisocyanate (1.33 g, 6.0mmol) and a catalyst dibutyltin dilaurate (0.1 g, 0.1 mmol) were added thereto under a nitrogen atmosphere, and then stirred while heating for 3 h to obtain a PU prepolymer.
(3) After the prepolymer was prepared, 4,4'-diaminodicyclohexylmethane (0.63g, 3.0mmol) and 20 mL of DMF as a reaction solvent were mixed to be uniform, and then slowly added dropwise into a reaction device and stirred for 1 h.
(4) After the reaction was completed, a resulting product was poured into a PTFE mold, dried to evaporate the solvent at 80°C for 48 h, obtaining a dry material of Comparative Example 1.

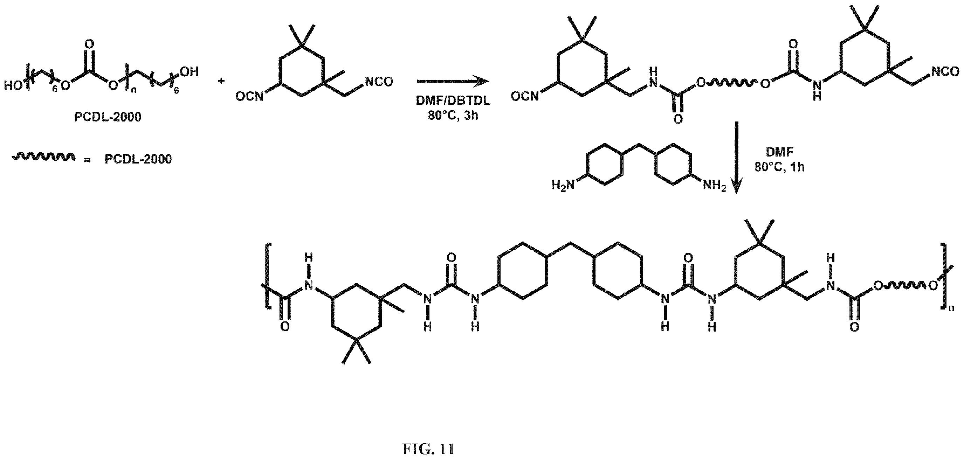

FIG. 11 shows a schematic diagram of a synthesis process in Comparative Example 1 of the present disclosure.

### Analysis of mechanical properties

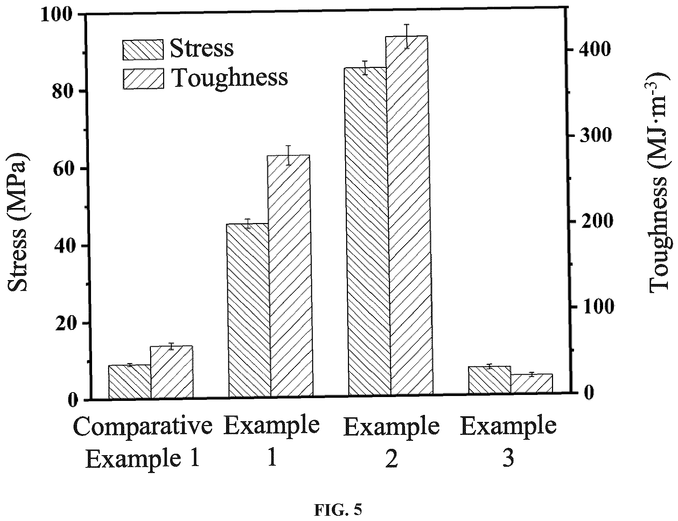

In order to effectively evaluate the mechanical properties of the prepared PU materials, the stress-strain curves of the films of the materials prepared in Examples 1 to 3 and Comparative Example 1 were tested (test standard: GB/T 1040-2006, test speed: 50 mm/min, test environment: 25°C), and then the test data were compared. The results are shown in FIG. 5, and the specific data are summarized in Table 1. As shown in Table 1, the materials prepared in Examples 1 to 3 of the present disclosure have an excellent mechanical property. Both Example 1 and Example 2 exhibit an excellent mechanical strength and a super toughness. Example 2 shows a maximum tensile strength of 85.0 MPa and a toughness of 418.4 MJ/m³. This far exceeds the strength and toughness of current commercial PU elastomer materials, showing great application potentials and development values.

The material of Comparative Example 1 prepared according to the preparation method provided in Comparative Example 1 has a relatively low mechanical strength and a relatively low toughness. Specifically, for Comparative Example 1 without reinforcing phase TOC, its mechanical properties are low, with a tensile strength of only 8.9 MPa and a toughness of 61.8 MJ/m³. In Example 1, after adding only 0.01 mmol of the reinforcing phase TOC, the mechanical properties of the material are significantly improved, with a tensile strength reaching 45.1 MPa and a toughness reaching 281.7 MJ/m³. More significantly, in Example 2, after adding only 0.05 mmol of the reinforcing phase TOC, the mechanical properties of the material are further significantly improved. Compared with Comparative Example 1, the material obtained in Example 2 has a toughness of 6.8 times and a tensile strength of 9.6 times those of Comparative Example 1. The bar-graph in FIG. 5 more intuitively indicates that incorporating an extremely small amount of the reinforcing phase TOC could significantly improve the mechanical properties and construct a PU material with ultra-high strength and ultra-high toughness.

The materials obtained in the examples of the present disclosure exhibit an excellent mechanical properties mainly for the following reasons:

On one hand, due to the introduction of a reinforcing phase TOC, a three-dimensional cage-like structure of the reinforcing phase TOC provides a strong support for reinforcing the robustness of PU materials.

On the other hand, there are abundant supramolecular interactions in the polymer network structure, including high-density hydrogen bond interactions and π-π interactions. These supramolecular interactions act as sacrificial bonds that are dynamically broken and reorganized in sequence, resulting in continuous energy dissipation, thus endowing the elastomer relatively great elongation and excellent toughness.

Therefore, the supramolecular PU according to the present disclosure shows obvious advantages in tensile strength and toughness, which are far superior to those of many recently-reported high-performance polymer materials.

**Table 1 Elongation at break, ultimate tensile strength, and toughness of films prepared in Examples 1 to 3 and Comparative Example 1**

| Sample | Strength (MPa) | Elongation at break (%) | Toughness (MJ/m³) |
|---|---|---|---|
| Example 1 | 45.1 | 1341 | 281.7 |
| Example 2 | 85.0 | 1231 | 418.4 |
| Example 3 | 7.2 | 385 | 22.3 |
| Comparative Example 1 | 8.9 | 1201 | 61.3 |

### Analysis of fatigue resistance

In order to clearly illustrate the advantages of the preparation method according to the present disclosure, a cyclic tensile experiment was conducted to evaluate the fatigue resistance and recoverability of the material in Example 2.

For Example 2, a total of 1,000 continuous cycles were completed at a stretching speed of 50 mm/min and a fixed strain of 200%, which were: the first 500-cycle stretching experiment and the second 500-cycle stretching experiment of Example 2 after heating recovery.

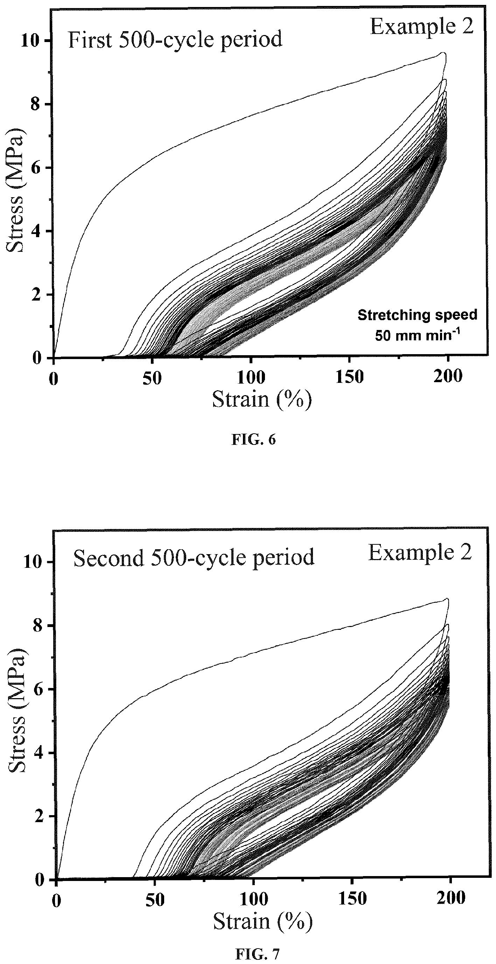

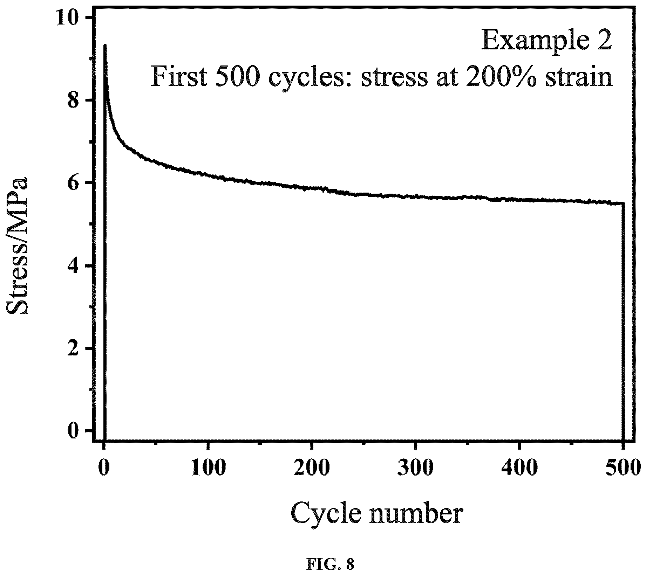

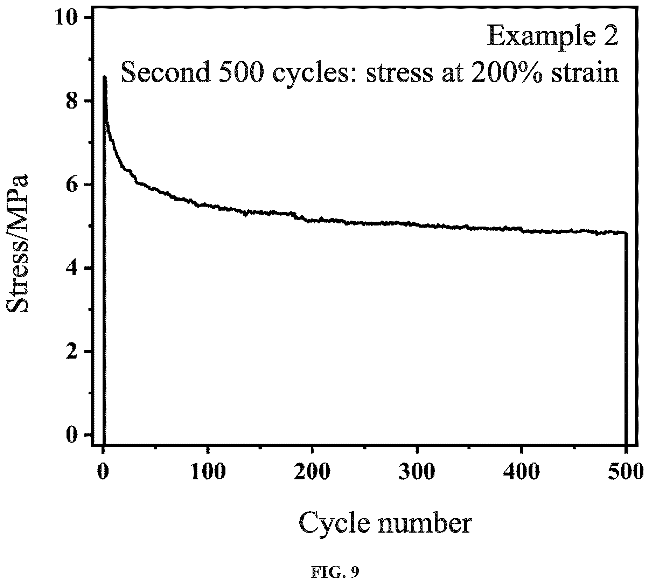

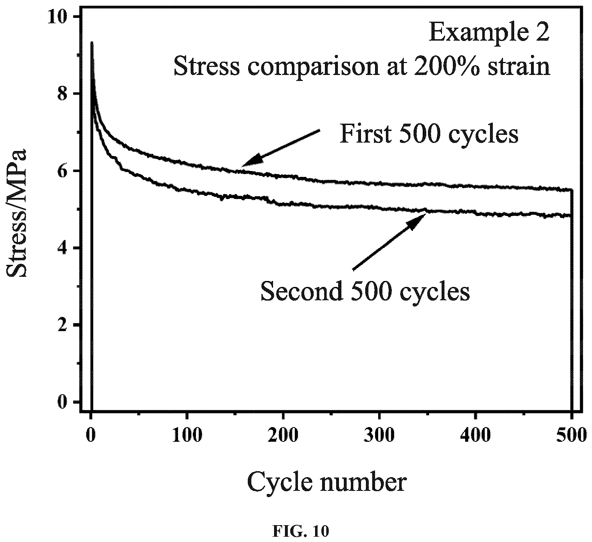

The relevant test results are shown in FIG. 6 to FIG. 10 to effectively evaluate fatigue resistance. FIG. 6 shows a stress-strain curve of the fatigue-resistant supramolecular PU prepared in Example 2 in the first 500 cycles; FIG. 7 shows a stress-strain curve of the fatigue-resistant supramolecular PU prepared in Example 2 in the second 500 cycles; FIG. 8 shows a summary of stress values of the fatigue-resistant supramolecular PU prepared in Example 2 corresponding to the first 500 cycles at 200% strain; FIG. 9 shows a summary of stress values of the fatigue-resistant supramolecular PU prepared in Example 2 corresponding to the second 500 cycles at 200% strain; and FIG. 10 shows a stress value comparison curve of the fatigue-resistant supramolecular PU prepared in Example 2 at 200% strain corresponding to the first and second 500 cycles, respectively.

As shown in FIG. 6, cycle 1 exhibits an obvious hysteresis loop (9.85 MJ/m³) and a residual strain of approximately 30% in the first 500 cycles, indicating that during the stretching a large amount of strain energy is dissipated by sacrificing bonds (i.e., supramolecular interactions: hydrogen bonds, π-π interactions). As the number of cycles increased, the corresponding hysteresis loop shrink significantly and gradually decrease. After 200 stretching cycles, the hysteresis loop stabilizes and almost no longer shrink. This means that supramolecular interactions achieves a dynamic balance, which helps the material maintain stable mechanical properties, namely desirable fatigue resistance.

After 500 stretching cycles, the sample of Example 2 was heated at 80°C for about 5 min, and it was observed that Example 2 returned to its original state, indicating that the material of Example 2 has better recoverability. Then, a second cyclic stretching experiment of 500 consecutive cycles was conducted on the recovered sample, and the results are shown in FIG. 7. FIG. 8 to FIG. 10 show a stress value comparison results corresponding to the first and second 500 cycles at 200% strain. It could be seen from the comparison results that there is a small difference in stress values of Example 2 corresponding to the first and second 500 cycles of stretching. This proves that the prepared supramolecular PU not only has ultra-high mechanical properties, but also shows ultra-high elastic recovery capabilities and excellent fatigue resistance under repeated deformation. After being stretched repeatedly 500 times or even 1,000 times, the material still has quite excellent mechanical properties.

In summary, the present disclosure provides a fatigue-resistant supramolecular PU and a preparation method thereof. In the present disclosure, a reinforcing phase TOC is innovatively introduced, and for the first time the reinforcing phase TOC and a supramolecular interaction are simultaneously integrated into a PU network structure, thereby successfully preparing a supramolecular PU with excellent mechanical properties and fatigue resistance. Experimental analysis shows that an extremely small amount of three-dimensional cage-like reinforcing phase OIC could significantly strengthen the PU, thus giving the supramolecular PU a tensile strength of 85.0 MPa and a toughness of 418.4 MJ/m³. Since supramolecular interactions endow the polymer network with sufficient energy dissipation, the supramolecular PU also exhibits excellent fatigue resistance and could still achieve stable recovery after 1,000 cycles of stretching at 200% strain. In view of this, the supramolecular PU exhibits broad application prospects in the fields of national defense, aerospace, automotive industry, and soft robotics.

The above descriptions are merely preferred embodiments of the present disclosure rather than limitations to the present disclosure in any form. It should be noted that those of ordinary skill in the art may further make several improvements and modifications without departing from the principle of the present disclosure, but such improvements and modifications should be deemed as falling within the scope of the present disclosure.

## Claims

1. A method for preparing a fatigue-resistant supramolecular polyurethane (PU), comprising:
mixing a diol, a diisocyanate, a catalyst, and a first organic solvent to obtain a mixture, and subjecting the mixture to prepolymerization to obtain a PU prepolymer, the diol being selected from the group consisting of a polyester diol and a polyether diol;
mixing the PU prepolymer, 4,4'-diaminodicyclohexylmethane, and a second organic solvent to obtain a mixed mixture, and subjecting the mixed mixture to chain extension to obtain a chain extension product; and
mixing the chain extension product, reinforcing phase total organic carbon (TOC), and a third organic solvent to obtain a mixed system, and subjecting the mixed system to first addition reaction to obtain the fatigue-resistant supramolecular PU, the reinforcing phase TOC having a structure shown in formula I:

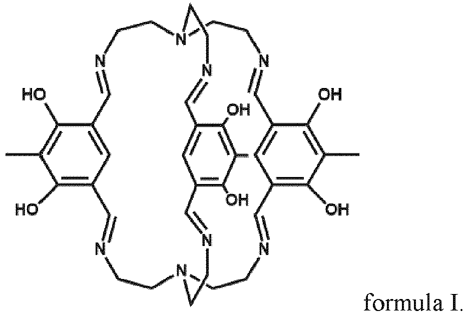

2. The method according to claim 1, wherein a molar ratio of the diol, the diisocyanate, the catalyst, the 4,4'-diaminodicyclohexylmethane, and the reinforcing phase TOC is in a range of (3-60):(6-120):(0.1-1):(1-60):(0.01-10).

3. The method according to claim 1 or 2, wherein the reinforcing phase TOC is prepared by a process comprising:
mixing 4,6-dihydroxy-5-methylisophthalaldehyde, tris(2-aminoethyl)amine, and a fourth organic solvent to obtain a mixed solution; and
subjecting the mixed solution to second addition reaction to obtain the reinforcing phase TOC.

4. The method according to claim 3, wherein a molar ratio of the 4,6-dihydroxy-5-methylisophthalaldehyde and the tris(2-aminoethyl)amine is in a range of (0.02-20):(0.03-30).

5. The method according to claim 1 or 2, wherein the diol has a molecular weight of 1,000 g/mol to 3,000 g/mol.

6. The method according to claim 1 or 2, wherein the diisocyanate is selected from the group consisting of hexamethylene diisocyanate, isophorone diisocyanate, and diphenylmethane diisocyanate.

7. The method according to claim 1, wherein the prepolymerization is conducted at a temperature of 60°C to 80°C for 3 h to 5 h.

8. The method according to claim 1, wherein the first addition reaction is conducted at a temperature of 60°C to 80°C for 1 h to 4 h.

9. A fatigue-resistant supramolecular PU prepared by the method according to any one of claims 1 to 8.

10. Use of the fatigue-resistant supramolecular PU according to claim 9 in the fields of national defense, aerospace, automobile industry, and soft robotics.
